Europäisches Patentamt

European Patent Office

Office européen des brevets

(19)

(11) Veröffentlichungsnummer: **0 044 905**
**A1**

(12) # EUROPÄISCHE PATENTANMELDUNG

(21) Anmeldenummer: **81102477.7**

(51) Int. Cl.³: **G 04 B 35/00, F 16 H 57/12**

(22) Anmeldetag: **02.04.81**

(30) Priorität: **24.07.80 DE 3028045**

(43) Veröffentlichungstag der Anmeldung: **03.02.82**
**Patentblatt 82/5**

(84) Benannte Vertragsstaaten: **CH DE FR GB IT LI**

(71) Anmelder: **VDO Adolf Schindling AG, Gräfstrasse 103, D-6000 Frankfurt/Main (DE)**

(72) Erfinder: **Rüb, Walter, Neuenhainer Weg 15, D-6231 Sulzbach/Ts. (DE)**

(74) Vertreter: **Könekamp, Herbert, Dipl.-Ing., Sodener Strasse 9, D-6231 Schwalbach (DE)**

(54) **Getriebe.**

(57) Bei einem Getriebe für elektrische Uhren mit durch einen Schrittmotor angetriebenen Zahnrädern besteht eines von zwei miteinander kämmenden Zahnrädern des Getriebes zumindest teilweise aus einem eisenhaltigen Werkstoff und die Zähne (4) des zweiten Zahnrades (3) sind als Magnete ausgebildet. Hierdurch lassen sich die Betriebsgeräusche des Getriebes stark dämpfen.

0044905

VDO Adolf Schindling AG      - 1 -        6000 Frankfurt/Main
Gräfstraße 103
1527
G-S Kl-do

### Getriebe

Die Erfindung bezieht sich auf ein Getriebe, insbesondere für
elektrische Uhren, mit durch einen Schrittmotor angetriebenen
Zahnrädern.

Ein derartiges Getriebe ist aus der DE-OS 2 652 058 bekannt.

Um die störenden Geräusche zu vermeiden, die beim Aneinanderschlagen der Zähne der beiden Zahnräder nach jedem Schaltschritt entstehen, besteht eines der Zahnräder aus einer Silikonkautschukzahnscheibe. Diese Zahnscheibe ist zwischen zwei
kreisförmigen Stützplatten eingeschichtet, die aus relativ
steifem Material bestehen.

Durch die Ausbildung des Zahnrades aus Silikonkautschuk wird
zwar das Aufeinanderschlagen der Zähne gedämpft. Trotzdem sind
die Geräusche, die dabei entstehen,noch relativ groß. So kann
auf diese Art eine Reduzierung der Geräusche nur auf etwa
40 dB erreicht werden.

Aufgabe der Erfindung ist es, ein Getriebe nach dem Oberbegriff
zu schaffen, dessen Geräuschentwicklung wesentlich geringer ist.

Diese Aufgabe wird erfindungsgemäß dadurch gelöst, daß eines von zwei miteinander kämmenden Zahnrädern des Getriebes zumindest teilweise aus einem eisenhaltigen Werkstoff besteht und Zähne des zweiten Zahnrades Magnete sind. Durch diese Ausbildung werden die Zähne des einen Zahnrades trotz ihres Spiels in den Zahnlücken des anderen Zahnrades, in die sie eingreifen, schon frühzeitig beim Eintreten in die Zahnlücke in Anlage an die eine Zahnflanke gezogen. Da diese Eingreifbewegung zum Zeitpunkt des In-Kontakt-Kommens der beiden Zähne mit einer relativ großen Radialkomponente erfolgt, ist kein hartes Aneinanderschlagen der Zähne möglich.

Es können entweder alle Zähne des zweiten Zahnrades Magnete sein oder aber ein Teil der Zähne des zweiten Zahnrades als Magnete ausgebildet und diese als Magnete ausgebildeten Zähne gleichmäßig am Umfang des Zahnrades verteilt angeordnet sein. In diesem zweiten Fall ist es z.B. möglich, daß nur jeder zweite Zahn als Magnet ausgebildet ist.

Vorteilhafterweise bilden die sich gegenüberliegenden Zahnflanken zweier benachbarter Zähne des zweiten Zahnrades je einen Nordpol und einen Südpol. Dabei können die einander benachbarten Zähne abwechselnd einen Südpol und einen Nordpol bilden oder aber die eine Zahlflanke eines Zahnes einen Nordpol und die andere Zahnflanke einen Südpol bilden. Die Pole sind dabei vorzugsweise so angeordnet, daß die Zähne des treibenden Zahnrades mit ihren in Drehrichtung vorderen Zahnflanken an den in Drehrichtung hinteren Zahnflanken der Zähne des getriebenen Zahnrades in Anlage sind.

Eine weitere Verringerung der Betriebsgeräusche kann dadurch erreicht werden, daß das erste Zahnrad aus einem Kunststoff besteht, in den eisenhaltige Teil-

0044905

chen eingebunden sind. Eine solche Ausbildung ermöglicht eine leichte Herstellung durch Spritzen und eine Gewichtsreduzierung der Zahnräder.

Eine solche Gewichtsreduzierung iat auch möglich, wenn das erste Zahnrad aus einem Kunststoffrad mit einem auf dessen radialen Umfang aufgesetzten Zahnkranz aus Stahl besteht.

Ebenfalls zu einer weiteren Geräuschreduzierung und zu einer Verminderung des Gewichts des Zahnrades führt es, wenn das zweite Zahnrad aus einem Kunststoff besteht, in den magnetisierbare Metallteilchen eingebunden sind.

Ein Ausführungsbeispiel der Erfindung ist in der Zeichnung dargestellt. Es zeigen

Figur 1    ein erfindungsgemäßes Getriebe
Figur 2    das Antriebszahnrad aus Figur 1 in der Seitenansicht

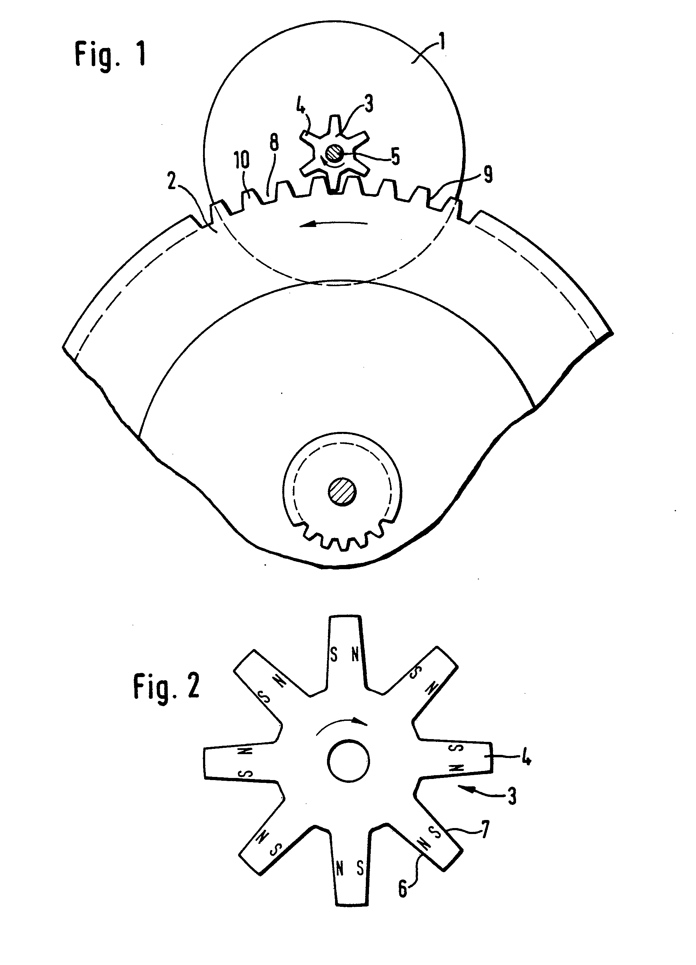

In Figur 1 ist das Getriebe eines Schrittmotors 1 dargestellt, bei dem ein erstes Zahnrad 2 z.B. eines Zeigerwerks von einem zweiten Zahnrad 3 antreibbar ist, das über eine Antriebswelle 5 mit einem Rotor festverbunden ist.

Das erste Zahnrad 2 besteht aus einem eisenhaltigen Werkstoff z.B. aus Stahl, während die Zähne 4 des Zahnrades 3 Magnete sind.

In Figur 2, in der das Zahnrad 3 vergrößert dargestellt ist, ist die Polung der Zähne 4 so, daß in Drehrichtung gesehen die vordere Zahnflanke 6 eines Zahnes 4 einen Nordpol und die hintere Zahnflanke 7 dieses Zahnes 4 einen Südpol bildet. Durch diese Magnetkräfte gelangen bei Betrieb des Getriebes die in die Zahnlücken 8 des Zahnrades 2 eingreifenden Zähne 4 schon

bei Beginn der Eingreifbewegung mit ihrer vorderen Zahnflanke 6
in gleitende Berührung mit der hinteren Zahnflanke 9 des jeweiligen Zahnes 10 des Zahnrades 2. In dieser Berührung werden sie
während der ganzen Zeit in der sie in die Zahnlücke 8 hineinragen  in Anlage gehalten. Ein störende Geräusche verursachendes
Aneinanderschlagen der Zähne der beiden Zahnräder ist daher
nicht möglich.

0044905

VDO Adolf Schindling AG           6000 Frankfurt/Main 90
                                  Gräfstraße 103

                                  22.Juli 1980
                                  G-S Kl-do
                                  1527


### Patentansprüche


1. Getriebe, insbesondere für elektrische Uhren, mit durch
einen Schrittmotor angetriebenen Zahnrädern, dadurch gekennzeichnet, daß eines von zwei miteinander kämmenden
Zahnrädern des Getriebes zumindest teilweise aus einem
eisenhaltigen Werkstoff besteht und Zähne (4) des zweiten
Zahnrades (3) Magnete sind.


2. Getriebe nach Anspruch 1, dadurch gekennzeichnet, daß
alle Zähne (4) des zweiten Zahnrades (3) Magnete sind.


3. Getriebe nach Anspruch 1, dadurch gekennzeichnet, daß
ein Teil der Zähne des zweiten Zahnrades als Magnete ausgebildet sind und diese als Magnete ausgebildeten Zähne
gleichmäßig am Umfang des Zahnrades verteilt angeordnet
sind.


4. Getriebe nach einem der vorhergehenden Ansprüche, dadurch
gekennzeichnet, daß die Zähne (4) des mit der Antr bswelle (5) des Schrittmotors (1) verbundenen Antriebszahnrades Magnete sind.


BAD ORIGINAL

0044905

5. Getriebe nach einem der vorhergehenden Ansprüche, dadurch gekennzeichnet, daß die sich gegenüberliegenden Zahnflanken (6, 7) zweier benachbarter Zähne (4) des zweiten Zahnrades (3) je einen Nordpol und einen Südpol bilden.

6. Getriebe nach Anspruch 5, dadurch gekennzeichnet, daß die einander benachbarten Zähne abwechselnd einen Nordpol und einen Südpol bilden.

7. Getriebe nach Anspruch 5, dadurch gekennzeichnet, daß die eine Zahnflanke (6) eines Zahnes (4) einen Nordpol und die andere Zahnflanke (7) einen Südpol bildet.

8. Getriebe nach einem der Ansprüche 1-7, dadurch gekennzeichnet, daß das erste Zahnrad (2) aus einem Kunststoff besteht, in den eisenhaltige Teilchen eingebunden sind.

9. Getriebe nach einem der Ansprüche 1-7, dadurch gekennzeichnet, daß das erste Zahnrad (2) aus einem Kunststoffrad mit einem auf dessen radialem Umfang aufgesetzten Zahnkranz aus Stahl besteht.

10. Getriebe nach einem der vorhergehenden Ansprüche, dadurch gekennzeichnet, daß das zweite Zahnrad (3) aus einem Kunststoff besteht, in den magnetisierbare Metallteilchen eingebunden sind.

0044905

Fig. 1

Fig. 2

**Europäisches Patentamt**

# EUROPÄISCHER RECHERCHENBERICHT

0044905

Nummer der Anmeldung

EP 81 10 2477

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 893 257 (SCHULTE)<br>* Spalte 1, Zeile 57 - Spalte 2, Zeile 35 * | 1,2,6 |
| X | CH - A - 319 707 (CAMILLE BAUER)<br>* Insgesamt * | 1,2,5-7 |
|  | US - A - 2 510 675 (BARUCH)<br>* Figuren 1,2 * | 1 |
|  | PRODUCT ENGINEERING, Band 30, 26. Oktober 1959, Seiten 71-74<br>New York, U.S.A.<br>F.T. GUTMANN: "18 Ways to control backlash in gearing"<br>* Seite 74, Zeile 15 * | 1,2 |
| X | BE - A - 490 950 (MINISTER OF SUPPLY)<br>* Insgesamt * | 1,2,5,<br>7,8,10 |
|  | FR - A - 870 478 (JUNGHANS)<br>* Seite 1, Zeile 44 - Seite 2, Zeile 25 * | 9 |
| AD | DE - A - 2 652 058 (HETTICH) | 1 |

**KLASSIFIKATION DER ANMELDUNG (Int. Cl.3)**

G 04 B 35/00
F 16 H 57/12

**RECHERCHIERTE SACHGEBIETE (Int. Cl.3)**

G 04 B 35/00
13/02
F 16 H 1/00
1/04
1/06
1/24
55/18
55/24
55/28
57/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-10-1981 | IVES |

EPA form 1503.1 06.78